(19) **Europäisches Patentamt**
**European Patent Office**
**Office européen des brevets**

(11) **EP 4 462 350 A1**

(12) **EUROPEAN PATENT APPLICATION**
published in accordance with Art. 153(4) EPC

(43) Date of publication:
**13.11.2024 Bulletin 2024/46**

(21) Application number: **22925116.0**

(22) Date of filing: **13.12.2022**

(51) International Patent Classification (IPC):
**G06T 5/00** (2024.01)　　　　**G06T 5/50** (2006.01)
**G06T 7/11** (2017.01)　　　　**G06T 3/40** (2024.01)
**G06T 5/40** (2006.01)　　　　**G06N 3/02** (2006.01)

(52) Cooperative Patent Classification (CPC):
**G06V 10/993; G06N 3/02; G06V 40/16**

(86) International application number:
**PCT/KR2022/020254**

(87) International publication number:
**WO 2023/149649 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 07.02.2022　KR 20220015763
30.11.2022　KR 20220165095

(71) Applicant: **Samsung Electronics Co., Ltd
Suwon-si, Gyeonggi-do 16677 (KR)**

(72) Inventors:
• **LEE, Jungmin**
**Suwon-si, Gyeonggi-do 16677 (KR)**
• **KANG, Taekeun**
**Suwon-si, Gyeonggi-do 16677 (KR)**
• **BAE, Gihyeon**
**Suwon-si, Gyeonggi-do 16677 (KR)**
• **BAEK, Sangwook**
**Suwon-si, Gyeonggi-do 16677 (KR)**
• **LEE, Sangwon**
**Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **ELECTRONIC DEVICE AND METHOD FOR IMPROVING IMAGE QUALITY**

(57)　An electronic device for improving the quality of an input image according to the technical idea of the present disclosure includes a memory storing at least one instruction, and at least one processor configured to, by executing the at least one instruction, calculate a degree of deterioration of the input image, in response to determining that the degree of deterioration of the input image is greater than a predetermined value, detect at least one facial image included in the input image, generate region information indicating a position and a type of at least one region included in the at least one facial image, generate a quality-improved facial image by using an artificial neural network (ANN) that uses the input image and the region information as input, and generate an output image by combining the quality-improved facial image with the input image.

FIG. 1

**EP 4 462 350 A1**

## Description

Technical Field

The present disclosure relates to an electronic device, and more particularly, to a method of improving image quality by using an electronic device.

Background Art

An artificial intelligence (AI) system is a computer system that implements human-level intelligence and allows a machine to learn by itself, make decisions, and produces a desired result or performs a desired action, unlike an existing rule-based smart system. As the AI system is more frequently used, the recognition rate of the AI system is improved and accurately understands a user's preference, and accordingly, the existing rule-based smart systems have gradually been replaced with deep-learning-based AI systems.

AI technology includes machine learning (deep learning) and element technologies utilizing machine learning. The machine learning is an algorithm technology that classifies/learns features of input data by itself, and covers technical fields such as linguistic understanding, visual understanding, inference/prediction, knowledge representation, or operation control using machine learning algorithms such as deep learning.

The element technologies for implementing AI technology may include, for example, at least one of language understanding technology for recognizing human languages/characters, visual understanding technology for recognizing objects like human vision, inference/prediction technology for determining information and performing logical inference and prediction, knowledge representation technology for processing human experience information to knowledge data, and motion control technology for controlling autonomous driving of vehicles or the motion of robots.

Meanwhile, in a case of technology for improving the quality of a deteriorated image by using an artificial neural network, it is difficult to restore the face of a person, and blending with a background may produce an unnatural-looking result with artifacts. Accordingly, there is a need for technology for effectively improving the quality of a facial image and combining the facial image with a background into a natural-looking image without creating a sense of heterogeneity.

Disclosure

Technical Solution

An electronic device for improving the quality of an input image according to the technical idea of the present disclosure includes a memory storing at least one instruction, and at least one processor configured to, by executing the at least one instruction, calculate a degree of deterioration of the input image, in response to determining that the degree of deterioration of the input image is greater than a predetermined value, detect at least one facial image included in the input image, generate region information indicating a position and a type of at least one region included in the at least one facial image, generate a quality-improved facial image by using an artificial neural network (ANN) that uses the input image and the region information as input, and generate an output image by combining the quality-improved facial image with the input image.

In addition, according to the technical idea of the present disclosure, the at least one processor may be further configured to calculate at least one degree of deterioration indicating the quality of each of the at least one facial image, based on characteristic information including color information and noise information of the input image, and determine whether the input image needs image quality improvement, based on the at least one calculated degree of deterioration.

In addition, according to the technical idea of the present disclosure, the at least one processor may be further configured to, in response to a ratio of a sum of the at least one degree of deterioration to a total number of the at least one facial image being calculated to be greater than a predetermined value, determine that the input image needs image quality improvement.

In addition, according to the technical idea of the present disclosure, the at least one processor may be further configured to, in response to determining that the degree of deterioration is greater than a predetermined value, determine that the facial image corresponding to the degree of deterioration needs image quality improvement.

In addition, according to the technical idea of the present disclosure, the at least one processor may be further configured to, in response to a ratio of the number of facial images determined to need image quality improvement to the total number of the at least one facial image being greater than a predetermined value, determine that the input image needs image quality improvement.

In addition, according to the technical idea of the present disclosure, the at least one processor may be further configured to generate array data that has a same size as color data containing red-green-blue (RGB) information of each pixel of the input image, wherein all elements of the array data have a value of 0, and generate the region information by assigning a value of 1 to at least one element of the array data corresponding to the at least one region included in the facial image.

In addition, according to the technical idea of the present disclosure, the at least one processor may be further configured to determine a type of the at least one region of the facial image, generate the array data having the same size as the color data, wherein all elements of the array data have a value of 0, and generate the region information by assigning a value indicating the determined type of the at least one region included in the facial image, to at least one element of the array data corresponding to the at least one region.

In addition, according to the technical idea of the present disclosure, the at least one processor may be further configured to generate the region information indicating at least one of an outline of the at least one region included in the at least one facial image, and an inside of the at least one region.

In addition, according to the technical idea of the present disclosure, the at least one processor may be further configured to detect, from the input image, a background image other than the at least one facial image, determine a combination ratio of the quality-improved facial image to the background image, and generate the output image by combining the quality-improved facial image with the background image based on the combination ratio.

In addition, according to the technical idea of the present disclosure, the at least one processor may be further configured to determine the combination ratio based on a user input.

In addition, according to the technical idea of the present disclosure, the color data may include information about R, G, and B of each pixel of the input image.

In addition, according to the technical idea of the present disclosure, the at least one processor may be further configured to obtain a ground-truth (GT) image, generate a test image by adding noise to the GT image, obtain an output image by inputting the test image into a generative adversarial network having preset weights, convert color domains of the output image and the test image, calculate a pixel-wise error of the output image and test image of which the color domains are converted, and change the weights based on the pixel-wise error.

In addition, according to the technical idea of the present disclosure, the at least one processor may be further configured to calculate a total variance (TV) value of a chroma channel of the output image of which the color domain is converted, and in response to determining that the TV value of the chroma channel is greater than a predetermined value, change the weights.

A method of improving the quality of an image by using an electronic device for improving the quality of an input image according to the technical idea of the present disclosure includes calculating a degree of deterioration of the input image, and in response to determining that the degree of deterioration of the input image is greater than a predetermined value, detecting at least one facial image included in the input image, generating region information indicating a position and a type of at least one region included in the at least one facial image, generating a quality-improved facial image by using an ANN that uses the input image and the region information as input, and generating an output image by combining the quality-improved facial image with the input image.

In addition, according to the technical idea of the present disclosure, the generating of the output image may include calculating at least one degree of deterioration indicating the quality of each of the at least one facial image, based on characteristic information including color information and noise information of the input image, and

determining whether the input image needs image quality improvement, based on the at least one calculated degree of deterioration.

In addition, according to the technical idea of the present disclosure, the generating of the region information may further include generating array data that has a same size as color data containing RGB information of each pixel of the input image, wherein all elements of the array data have a value of 0, and generating the region information by assigning a value of 1 to at least one element of the array data corresponding to the at least one region included in the facial image.

In addition, according to the technical idea of the present disclosure, the generating of the region information may further include determining a type of the at least one region of the facial image, generating the array data having the same size as the color data, wherein all elements of the array data have a value of 0, and generating the region information by assigning a value indicating the determined type of the at least one region included in the facial image, to at least one element of the array data corresponding to the at least one region.

In addition, according to the technical idea of the present disclosure, the generating of the output image may further include detecting, from the input image, a background image other than the at least one facial image, and generating the output image by combining the quality-improved facial image with the background image.

In addition, according to the technical idea of the present disclosure, the method may further include obtaining a GT image, generating a test image by adding noise to the GT image, obtaining an output image by inputting the test image into a generative adversarial network having preset weights, converting color domains of the output image and the test image, calculating a pixel-wise error of the output image and test image of which the color domains are converted, and changing the weights based on the pixel-wise error.

Description of Drawings

FIG. 1 is a flowchart of a method by which an electronic device improves the quality of a deteriorated image, according to an embodiment of the present disclosure.

FIG. 2 is a flowchart for describing a process in which an electronic device determines an input image as a deteriorated image, according to an embodiment of the present disclosure.

FIGS. 3A and 3B are diagrams for describing a method by which an electronic device receives an input of a deteriorated image and outputs a quality-improved image, according to an embodiment of the present disclosure.

FIG. 4 is a diagram for describing a method by which an electronic device combines a facial region with a background region, according to an embodiment of the present disclosure.

FIG. 5 is a diagram for describing an embodiment of region information generated by an electronic device, according to an embodiment of the present disclosure.

FIG. 6 is a diagram for describing an embodiment of region information generated by an electronic device, according to an embodiment of the present disclosure.

FIG. 7 is a block diagram of an electronic device for improving the quality of a deteriorated image, according to an embodiment of the present disclosure.

FIG. 8 is a diagram illustrating a classification network according to an embodiment of the present disclosure.

FIG. 9 is a diagram for describing a method by which an electronic device outputs an image with color loss, according to an embodiment of the present disclosure.

FIG. 10 is a diagram for describing an embodiment in which an electronic device adjusts a ratio for combining a quality-improved facial image with a background image, according to an embodiment of the present disclosure.

FIG. 11 is a diagram for describing a method by which an electronic device improves image quality by using a second input image, according to an embodiment of the present disclosure.

Mode for Invention

Although the terms used in describing the present embodiments are selected from among common terms that are currently widely used in consideration of functions in the present embodiments, the terms may be different according to an intention of one of ordinary skill in the art, a precedent, or the advent of new technology. In addition, in certain cases, there are also terms arbitrarily selected by the applicant, and in this case, the meaning thereof will be defined in detail in the description. Therefore, the terms used in describing the present embodiments are not merely designations of the terms, but the terms are defined based on the meaning of the terms and content throughout the present embodiments.

As the present embodiments allows for various changes and numerous forms, some embodiments will be illustrated in the drawings and described in detail. However, this is not intended to limit the present embodiments to particular modes of practice, and it is to be appreciated that all changes, equivalents, and substitutes that do not depart from the spirit and technical scope of the present embodiments are encompassed in the present disclosure. Terms used herein are merely used to describe embodiments, and are not intended to limit the present embodiments.

Unless otherwise defined, the terms used in describing the present embodiments have the same meaning as generally understood by those of skill in the art to which the present embodiments pertain. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, detailed descriptions of the present disclosure will be made with reference to the accompanying drawings, which exemplarily show particular embodiments in which the present disclosure may be practiced. The embodiments are described in sufficient detail to enable those of skill in the art to practice the present disclosure. It should be understood that various embodiments of the present disclosure are different from each other but are not necessarily mutually exclusive. For example, particular shapes, structures, and characteristics described herein may be implemented with changes from an embodiment to another without departing from the spirit and scope of the present disclosure. In addition, it should be understood that the location or arrangement of individual components in each embodiment may be changed without departing from the spirit and scope of the present disclosure. Therefore, the detailed descriptions below are not to be taken in a limiting sense, and the scope of the present disclosure should be understood to encompass the scope of the claims and all equivalents thereof. In the drawings, like reference numerals indicate identical or similar elements throughout various aspects. In the accompanying drawings, some elements are exaggerated, omitted, or schematically shown, and the size of each element does not entirely reflect the actual size. Thus, the present disclosure is not limited by the relative sizes or spacings in the accompanying drawings.

Hereinafter, various embodiments will be described in detail with reference to the accompanying drawings such that those of skill in the art may easily practice the present disclosure.

An electronic device may include a processor, an artificial neural network module, and a memory. The artificial neural network module may perform neural network operations, such as neural network model inference and/or pattern matching functions, by using locally collected data. The artificial neural network module may be a chip for efficiently performing an artificial intelligence (AI) algorithm. An AI accelerator may be, for example, a central processing unit (CPU), a graphics processing unit (GPU), a field-programmable gate array (FPGA), a system-on-chip (SoC), an application-specific integrated circuit (ASIC), a vision processing unit (VPC), a neuromorphic integrated circuit (IC), or the like, but is not limited thereto.

According to various embodiments, the memory may include volatile memory and non-volatile memory to temporarily or permanently store various pieces of data. The memory may store various instructions executable by the processor. The instructions may include control commands that may be recognized by the processor, such as arithmetic and logical operations, data transfer, or input/output.

For example, the processor may execute software to control at least one other component (e.g., a hardware or software component) of an electronic device connected to the processor, and may perform various data processing or operations. According to an embodiment, as at least part of data processing or computation, the processor may store a command or data received from another component in the volatile memory, process the command or data stored in the volatile memory, and store resulting data in the non-volatile memory. According to an embodiment, the processor may include a main processor (e.g., a central processing unit or an application processor) or an auxiliary processor (e.g., a GPU, a neural processing unit (NPU), an image signal processor, a sensor hub processor, or a communication processor) that may be operated together with or independently of the main processor. According to an embodiment, the processor may be an embedded CPU or an application processor capable of outputting a Peripheral Component Interconnect Express (PCIe) signal.

According to various embodiments, the processor may be operatively, functionally, and/or electrically connected to each component of the electronic device (e.g., the artificial neural network module and the memory), to perform operations or data processing related to control and/or communication of the component.

There are no limitations to computation and data processing functions that the processor may implement on the electronic device, but hereinafter, various embodiments of methods of improving deteriorated quality of an input image will be described.

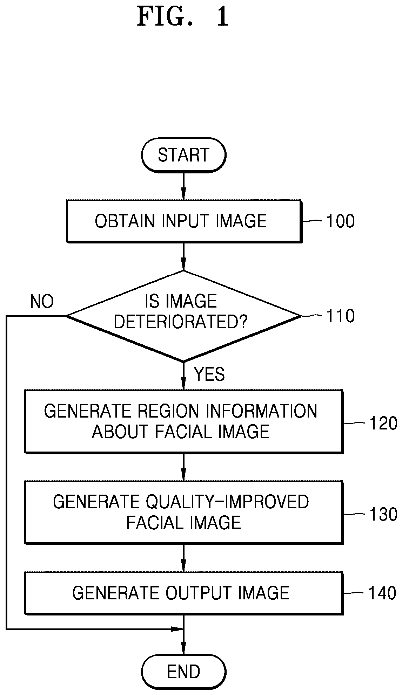

FIG. 1 is a flowchart of a method by which an electronic device improves the quality of a deteriorated image, according to an embodiment of the present disclosure.

The electronic device may obtain an input image. The electronic device may determine whether the obtained input image is a deteriorated image. When it is determined that the obtained input image is a deteriorated image, the electronic device may generate region information of at least one facial image included in the input image. The electronic device may generate a quality-improved facial image by using the generated region information. The electronic device may generate an output image by combining the quality-improved facial image with the input image. Hereinafter, operations of the electronic device will be described in detail.

In operation 100, the electronic device may obtain an input image. In an embodiment, the electronic device may obtain an input image by capturing a photo by using a camera. The input image obtained by the electronic device may be a deteriorated photo. In an embodiment, a deteriorated photo means that the photo has been physically/chemically damaged. In an embodiment, in order to restore an image of the deteriorated photo, the user may obtain a deteriorated image by photographing the deteriorated photo by using the electronic device. According to an embodiment, the electronic device may obtain a deteriorated image through excessive compression or downsizing. For example, even in a digital environment, an image may be deteriorated after undergoing excessive compression or downsizing.

In an embodiment, an input image that may be obtained by the electronic device may be data in the form of an array having a fixed size (e.g., 512X512px), and each element of the array may contain red-green-blue (RGB) information (e.g., a red value, a green value, and a blue value). The array data refers to a data structure that consists of a predetermined number of columns and rows, in which each element where a column and a row meet contains data. The input image and the region information may be expressed as array data with 512 rows and 512 columns and 512*512 elements. Alternatively, each element of the array data of the input image may include a color code corresponding to RGB information. For example, the data of the input image may include a red value, a green value, and a blue value assigned to each pixel, or may include a color code corresponding to the red value, the green value, and the blue value assigned to each pixel. The input image may include at least one facial (or person) image. The facial image may include the entire face of a person, or may include at least part of the face.

In operation 110, the electronic device may determine whether the input image is a deteriorated image. In an embodiment, because an unintentional error may occur when an undeteriorated image is input into an image quality improvement algorithm, it is determined whether the input image is a deteriorated image, prior to an image quality improvement process. For example, the electronic device performs an operation of improving the quality of a deteriorated image, and thus does not perform the image quality improvement process when an undeteriorated image is obtained.

In an embodiment, the electronic device may analyze the at least one facial image included in the input image to determine whether image quality improvement is necessary because the input image is a deteriorated image.

In an embodiment, the electronic device may calculate a degree of deterioration of the at least one facial image included in the input image, in order to determine whether the input image is a deteriorated image. In an embodiment, a degree of deterioration may indicate the degree to which the quality of a facial image is deteriorated. Thus, a higher degree of deterioration may indicate that image quality improvement is necessary.

The electronic device may perform image processing on the input image to obtain image characteristic information including whether the input image includes a faded region, and noise information of the input image. The electronic device may determine whether the input image is a deteriorated image, by using the obtained characteristic information and a classification network. The classification network may be an Old/New 2-class classifier that classifies an input image into two types. For example, the classification network may include a Visual Geometry Group network (VGGNet) including a plurality of layers. The VGG network is a main model of a CNN algorithm with an increased network depth, and may have various numbers of layers (e.g., 11, 13, 16, or 19). The electronic devices may better extract features of an image by using a VGG network with a fixed kernel size of 3x3, which is the minimum unit, and an increased number of convolution operations, and classify an image with high accuracy. For example, an electronic device may determine whether the input image is a deteriorated image, by using the VGG network.

In an embodiment, the electronic device may separately calculate a degree of deterioration for each facial image included in the input image. For example, when the input image includes a first facial image, a second facial image, and a third facial image, the electronic device may calculate a first degree of deterioration corresponding to the first facial image, a second degree of deterioration corresponding to the second facial image, and a third degree of deterioration corresponding to the third facial image. For example, when the first facial image is more deteriorated than the second facial image and the second facial image is more deteriorated than the third facial image, the first degree of deterioration calculated by the electronic device may be greater than the second degree of deterioration, and the second degree of deterioration may be greater than the third degree of deterioration. The electronic device may calculate a degree of deterioration with a variable range of values according to a calculation method, but hereinafter, for convenience of description, it will be described that a degree of deterioration has a value between 0 and 1.

The electronic device may determine whether the quality of the input image needs to be improved, based on the calculated degree of deterioration of each facial image. The electronic device may determine whether the quality of the input image needs to be improved, by using various logic. For example, the electronic device may determine whether the quality of the input image needs to be improved, by using an Old/New 2-class classifier. The Old/New 2-class classifier may determine the input image as a deteriorated image (Old) or as a normal image (New) based on the degree of deterioration of the at least one facial image included in the input image.

According to an embodiment, when the number of deteriorated facial images is greater than half the total number of facial images included in the input image, the electronic device may determine the input image as a deteriorated image. In an embodiment, the deteriorated facial image may refer to a facial image determined to be deteriorated, from among the facial images included in the input image. The electronic device may determine at least some of the facial images included in the input image, as deteriorated facial images, in various manners.

According to an embodiment, when the degree of deterioration of a facial image is greater than a predetermined value, the electronic device may determine the facial image as a deteriorated facial image. For example, when the first degree of deterioration and the second degree of deterioration are greater than the predetermined value and the third degree of deterioration is less than the predetermined value, the electronic device may determine the first facial image and the second facial image as deteriorated facial images. Because the number of deteriorated facial images is greater than half the total number of facial images, the electronic device may determine the input image as a deteriorated image. On the contrary, when only the first degree of deterioration is greater than the predetermined value and the second degree of deterioration and the third degree of deterioration are less than the predetermined value, the electronic device may determine only the first facial image as a deteriorated facial image. Because the number of deteriorated facial images is less than half the total number of facial images, the electronic device may determine the input image as an undeteriorated image.

According to an embodiment, the electronic device may determine whether the input image is a deteriorated image, based on the total sum of calculated degrees of deterioration. For example, when the total sum of the calculated degrees of deterioration is greater than half the number of facial images included in the input image, the electronic device may determine the input image as a deteriorated image.

According to an embodiment, the electronic device may determine whether the input image is a deteriorated image, by combining various conditions. For example, when a condition where the number of deteriorated facial images is greater than half the total number of facial images, and a condition where the total sum of the calculated degrees of deterioration is greater than half the number of facial images included in the input image are simultaneously satisfied, the electronic device may determine the input image as a deteriorated image. The conditions under which the electronic device determines the input image as a deteriorated image are not limited to those described above, and determination of a deteriorated image may be performed in various manners based on the degree of deterioration of each facial image included in the input image.

In operation 120, the electronic device may generate region information including information about at least one facial image included in the input image. In an embodiment, the region information is array data with the same size as the input image (e.g., 512X512px), and may include information about a region containing a body part (e.g., eyes, eyebrows, nose, mouth, ear, chin, or head) in at least one facial image included in the input image, and an outline of the region. In an embodiment, the region information may indicate the type and position of a body part included in the facial image. According to an embodiment, the electronic device may generate region information by assigning a predetermined value to each pixel of array data corresponding to the outline of the body part included in the facial image. For example, the electronic device may generate region information by assigning a value of 1 to each element in the array data corresponding to the outlines of the eyes, nose, mouth, ears, and chin in the input image, and assigning a value of 0 to the other elements. The region information generated as described above indicates the outline of a region in the facial image where each body part is located, and thus may be used to improve the image quality of the face.

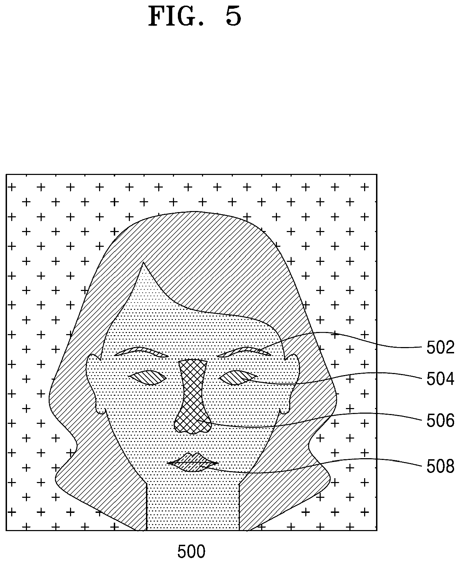

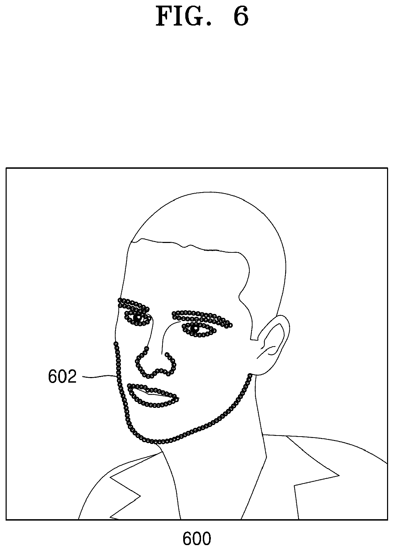

According to an embodiment, the electronic device may generate region information by assigning a predetermined value to each pixel of array data corresponding to the outline of a body part included in the facial image and a region within the outline. For example, the electronic device may generate region information by assigning a predetermined value for each body part to each element in the array data corresponding to the outlines of the eyes, nose, mouth, ears, and chin in the input image, and regions within the outlines, and assigning a value of 0 to the other elements. A method by which the electronic device generates region information is not limited thereto. The method by which the electronic device generates region information will be described in detail below with reference to FIGS. 5 and 6.

In operation 130, the electronic device may generate a quality-improved facial image by using the region information generated in operation 120. The electronic device may generate a quality-improved facial image by inputting RGB values of each pixel of the input image, and the region information into an artificial neural network. The electronic device may determine a region containing each body part in the facial image by using the region information, and thus may generate a quality-improved facial image.

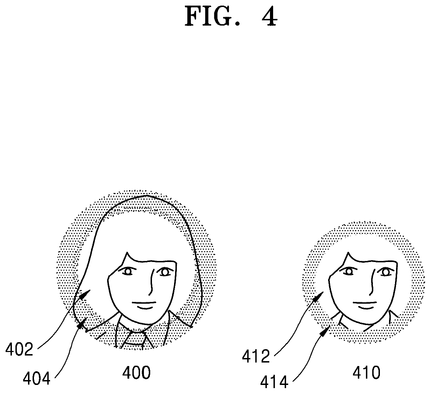

In operation 140, the electronic device may generate an output image by combining the quality-improved facial image with the input image. In an embodiment, the input image may include a facial image and a background image. The input image has a data format in the form of a two-dimensional (2D) array, and thus may include a facial image and a background image. The background image refers to a part of the input image other than the facial image. In an embodiment, the electronic device may generate an output image by combining the quality-improved facial image with the background image. A method by which the electronic device generates an output image by combining a quality-improved facial image with a background image to appear natural will be described in detail below with reference to FIG. 4.

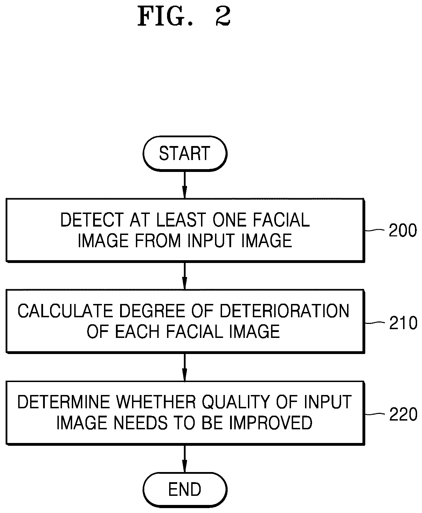

FIG. 2 is a flowchart for describing a process in which an electronic device determines an input image as a deteriorated image, according to an embodiment of the present disclosure.

In operation 200, the electronic device may detect at least one facial image from an input image. The input image may contain at least one person and/or face. In an embodiment, the electronic device may detect at least one facial image included in the input image by using a predetermined algorithm.

In operation 210, the electronic device may calculate a degree of deterioration of each detected facial image. The electronic device may calculate a degree of deterioration of the at least one facial image in various manners. The degree of deterioration may indicate the degree to which the quality of each facial image needs to be improved. The electronic device may calculate a degree of deterioration for each detected facial image.

In operation 220, the electronic device may determine whether the quality of the input image needs to be improved. The electronic device may determine whether the quality of the input image needs to be improved, based on the degree of deterioration of each facial image calculated in operation 210. For example, when the sum of the degree of deteriorations of the at least one facial image is greater than half the total number of facial images, the electronic device may determine that the quality of the input image needs to be improved. For example, when the number of facial images determined to need improvement in image quality is greater than half the total number of facial images, the electronic device may determine that the quality of the input image needs to be improved.

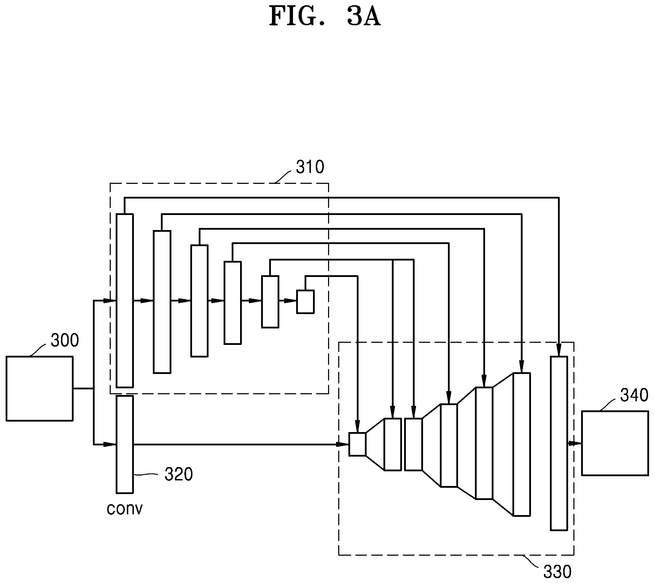

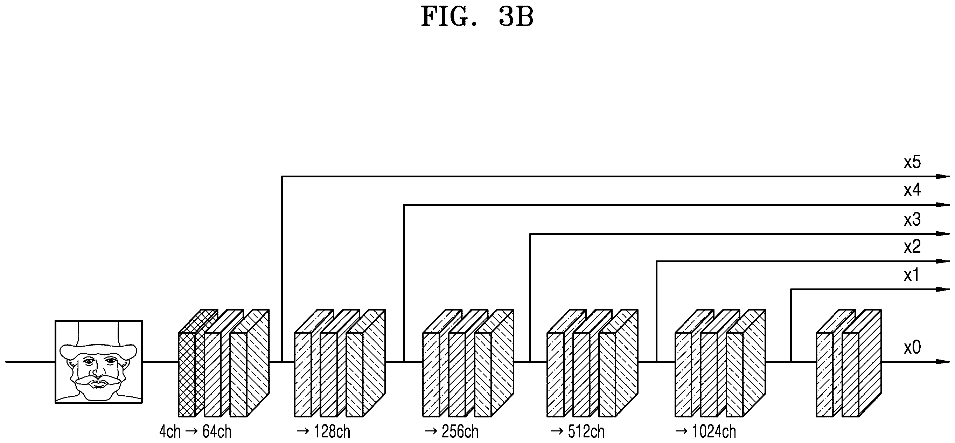

FIGS. 3A and 3B are diagrams for describing a method by which an electronic device receives a deteriorated image and outputs a quality-improved image, according to an embodiment of the present disclosure.

A generative adversarial network (GAN) may include a generator, a discriminator, and a loss function. The GAN is a model in which the generator and the discriminator improve their performance by learning and contesting with each other. Each of the generator and the discriminator may include at least one layer. The layer may include a filter including weight information for extracting features from input data.

The generator may be trained to receive an input a data set (DS), and output fake data (FD). The data set may be a set of data including at least one of an image, a text, and a voice. The fake data may be fake image data, fake text data, or fake voice data.

A real-data (RD) database (DB) may include a set of real data. The real data may corresponding to the fake data. For example, in a case in which the fake data is fake image data, the real data may be real image data.

The discriminator may be trained to receive an input of fake data or real data, and determine whether the fake data or real data is fake.

The loss function may calculate a loss function value based on a discrimination result. The loss function value may be delivered to the discriminator and the generator through backpropagation. A weight of at least one layer included in each of the discriminator and the generator may be refined based on the loss function value.

In an embodiment, the generator may include a plurality of sub-generators, depending on the type of the data set and output data. For example, a first sub-generator may be trained to receive an input of a data set of image data, and output fake voice data. For example, a second sub-generator may be trained to receive an input of a data set of image data, and output fake text data. For example, a third sub-generator may be trained to receive an input of a data set of image data and text data, output fake voice data. However, the present disclosure is not limited thereto, and the generator may include sub-generators with an arbitrary combination of types of data set (e.g., a set of data including at least one of an image, a text, and a voice) and output data (e.g., fake image data, fake text data, or fake voice data).

In an embodiment, the discriminator may include a plurality of sub-discriminators, depending on the type of data output by the generator, that is, the type of fake data. For example, a first sub-discriminator may be trained to receive an input of fake voice data or real voice data, and determine whether the fake voice data or real voice data is fake. A second sub-discriminator may be trained to receive an input of fake image data or real image data, and determine whether the fake image data or real image data is fake. A third sub-discriminator may be trained to receive an input of fake text data or real text data, and determine whether the fake text data or real text data is fake. The generator may be trained through the process of training a GAN described above.

FIG. 3A is a diagram for describing a method by which an electronic device generates an improved facial image by compressing and restoring facial information by using a GAN, according to an embodiment.

The GAN may include a compression module 310, a convolution module 320, and a restoration module 330. The number of stages that may be included in the compression module 310 and the restoration module 330 of the GAN is not limited, but hereinafter, for convenience description, it will be described that the compression module 310 and the restoration module 330 include three compression stages and three restoration stages, respectively.

The GAN may obtain a deteriorated image as an input image 300 and compress the input image 300 through several stages. For example, the compression module 310 may include a first compression stage, a second compression stage, and a third compression stage. The GAN may sequentially compress the input image 300 through a plurality of compression stages. For example, the GAN may receive the input image 300 and output a first compressed image at the first compression stage, receive the first compressed image and output a second compressed image at the second compression stage, and receive the second compressed image and output a third compressed image at the third compression stage.

In an embodiment, the GAN may extract semantic information of the input image 300 or the compressed image at each compression stage. For example, first semantic information of the first compressed image may be extracted at the first compression stage, second semantic information of the second compressed image may be extracted at the second compression stage, and third semantic information of the third compressed image may be extracted at the third compression stage. The compression stages may transmit the extracted semantic information to the respective restoration stages of the restoration module 330. For example, the third compression stage may transmit the third semantic information to a first restoration stage, the second compression stage may transmit the second semantic information to a second restoration stage, and the first compression stage may transmit the first semantic information to a third restoration stage.

In an embodiment, the convolution module 320 may transmit, to the first restoration stage, a result of performing a convolution operation on the input image 300. The first restoration stage may perform restoration of the compressed image based on the result of performing the convolution operation on the input image 300.

In an embodiment, the restoration module 330 of the GAN may restore the compressed image through several stages, to output an improved image. For example, the restoration module 330 may include the first restoration stage, the second restoration stage, and the third restoration stage. The GAN may sequentially restore the compressed image through a plurality of restoration stages. For example, the GAN may receive the third compressed image and generate a first restored image at the first restoration stage, receive the first compressed image and generate a second restored image at the second restoration stage, and receive the second compressed image and generate an output image 340 at the third restoration stage.

In an embodiment, the GAN may restore an image at each restoration stage based on semantic information received from each compression stage. For example, the first restoration stage may output the first restored image based on the received third semantic information, the second restoration stage may output the second restored image based on the received second semantic information, and the third restoration stage may output the output image 340 based on the received first semantic information.

FIG. 3B illustrates a process in which an electronic device improves the quality of the input image 300 by inputting four channels into the algorithm described above with reference to FIG. 3A, according to an embodiment of the present disclosure. Descriptions of details of an image quality improvement operation of the algorithm of FIG. 3B that are similar to their respective counterparts of the algorithm of FIG. 3A will be omitted. In the algorithm of FIG. 3A, three channels with an R value, a G value, and a B value of the input image 300 may be input to the compression module 310. Four channels with an R value, a G value, a B value, and region information of the input image 300 may be input to the algorithm of FIG. 3B. A GAN may use 4-channel information to generate an output image 340 that is more improved than that of the algorithm of FIG. 3A using 3-channel information.

FIG. 4 is a diagram for describing a method by which an electronic device combines a facial region with a background region, according to an embodiment of the present disclosure.

The electronic device may detect at least one facial image from an input image, and determine, as a background image, a region in the input image that does not include a facial image. After performing an image quality improvement process on the facial image, the electronic device may combine a quality-improved facial image with the background image with respect to a boundary region of the facial image according to Equation 1 below.

【Equation 1】

$$I_{bleding} = I_{face} \times \alpha + I_{backgroun}d \times (1 - \alpha)$$

$I_{blending}$: Output image
$I_{face}$: Facial image
$I_{background}$: Background image
$\alpha$: Combination ratio

The electronic device may determine a combination ratio $\alpha$ for a natural-looking combination of a quality-improved facial image and a background image. The combination ratio may refer to a ratio in which the quality-improved facial image is reflected in the output image. As the combination ratio increases, the quality-improved facial image may be more reflected in the output image, and the background image may be less reflected in the output image. In order to process a boundary between a quality-improved facial image and a background image to appear natural, the electronic device may set the combination ratio to decrease toward the boundary of the improved facial image. For example, the electronic device may determine a region including the center of the quality-improved facial image as a central region, and determine a region including an edge of the facial image as a border region. The electronic device may set the combination ratio to 1 in the central region (reflecting the improved facial image), and decrease the combination ratio toward the background image in the border region such that the combination ratio is close to 0 at a boundary with the background image (reflecting the background image). In the related art, the outline of a face is not clear, and thus, the rate at which the combination ratio decreases toward the boundary of the face is low (400). That is, the size of a central region 402 is small and a border region 404 is wide. Thus, there is an issue that an output image has a large region where a facial image and a background image overlap with each other, causing artifacts. However, the electronic device according to the present disclosure may clearly identify the outline of a face by using region information, and thus may increase the rate at which the combination ratio decreases toward the boundary of an improved facial image (410). For example, an output image may be generated in which a central region 412 is large and a border region 414 is narrow. Thus, the electronic device according to the present disclosure may generate an output image with a minimized region where a quality-improved facial image and a background image overlap with each other. The electronic device may obtain a natural-looking combination of a facial image and a background image without artifacts while clearly reflecting the boundary between the images.

FIG. 5 is a diagram for describing an embodiment of region information generated by an electronic device, according to an embodiment of the present disclosure.

The electronic device may generate region information of an input image. The region information of the input image may include information about a body part included in at least one facial image included in the input image. Region information that may be generated by the electronic device is not limited to information about a body part, and may include information about various objects (e.g., backgrounds, animals, or objects) that may be included in an input image, but hereinafter, it will be described that region information includes information about a body part.

According to an embodiment, the electronic device may generate face-segmentation information including information about the position and type of a body part included in a facial image. The electronic device may recognize at least one body part in an input image in order to generate region information. For example, referring to FIG. 5, the electronic device may generate region information including information about the positions and types of an eyebrow 502, an eye 504, a nose 506, and a mouth 508 included in a facial image.

According to an embodiment, the electronic device may generate array data having the same size as the input image, and assign a predetermined value to each element of the array data corresponding to a region containing a recognized body part. The electronic device may assign different values to respective elements of the array data according to the type of each body part. For example, the electronic device may assign 1 to each element of the array data corresponding to a region containing the eyebrow 502, 2 to each element of the array data corresponding to a region containing the eye 504, 3 to each element of the array data corresponding to a region containing the nose 506, and 4 to each element of the array data corresponding to a region containing the mouth 508. The electronic device may assign 0 to each element of the array data corresponding to a region where no body part is recognized. An artificial neural network may receive the region information and recognize the position and type of each body part in the facial image.

FIG. 6 is a diagram for describing an embodiment of region information generated by an electronic device, according to an embodiment of the present disclosure.

The electronic device may generate region information indicating an outline 602 of at least one region of a facial image 600. For example, the electronic device may generate region information indicating the outline 602 of at least one body part included in a face. Referring to FIG. 6, the electronic device may generate region information by assigning predetermined values to elements of generated array data corresponding to outlines 602 of eyebrows, eyes, nose, mouth, and chin. For example, the electronic device may generate region information by assigning 1 to elements of the array data corresponding to the outlines 602 of the eyebrows, eyes, nose, mouth, and chin, and assigns 0 to the other elements of the array data.

According to an embodiment, in order to reflect the overall outline of the face in the region information, the electronic device may arbitrarily generate the overall outline of the face by extending the outline of the chin. For example, the electronic device may draw a semicircle toward the forehead by using, as a diameter, a straight line between both end points of the outline of the chin, and set a region including the drawn semicircle and the outline of the chin, as the overall outline of the face. The electronic device may generate region information by assigning predetermined values to elements of data array corresponding to the overall outline of the face, and the outlines of body parts in the face.

The electronic device may generate an output image with more improved image quality compared to image quality improvement using only RGB values, by inputting the generated region information into the artificial neural network as described above with reference to FIGS. 5 and 6.

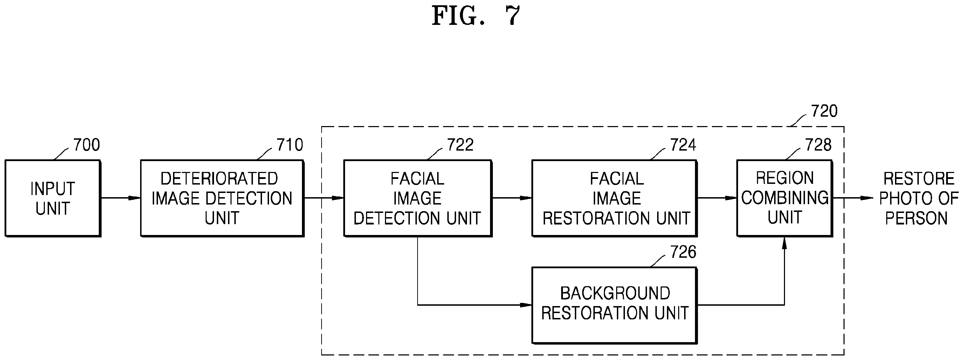

FIG. 7 is a block diagram of an electronic device for improving the quality of a deteriorated image, according to an embodiment of the present disclosure.

Referring to FIG. 7, the electronic device according to an embodiment may include an input unit 700, a deteriorated image detection unit 710, and a deteriorated image processing unit 720 including a facial image detection unit 722, a facial image restoration unit 724, a background restoration unit 726, and a region combining unit 728.

The input unit 700 receives an input image.

The deteriorated image detection unit 710 may determine whether the received input image is a deteriorated image. For example, the deteriorated image detection unit 710 may perform image processing on the input image to obtain characteristic information of the input image including whether the input image contains a faded region, color distribution information of the input image, noise information of the input image, and the like. The deteriorated image detection unit 710 may determine whether the input image is a deteriorated image, based on the obtained characteristic information of the input image.

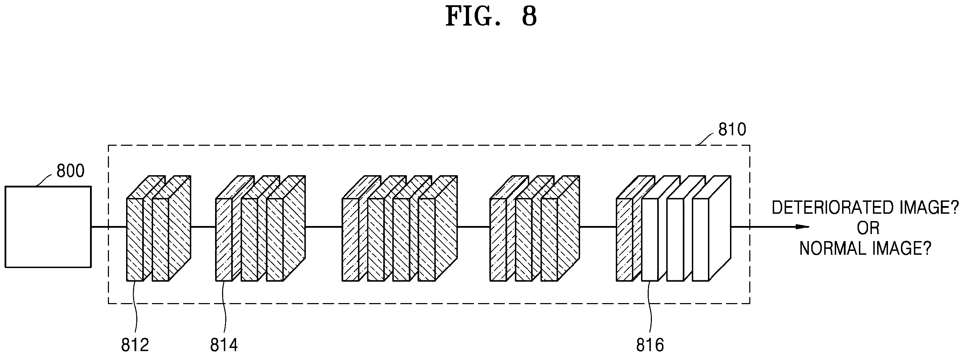

Alternatively, the deteriorated image detection unit 710 may determine whether the input image is a deteriorated image, by using a classification network (not shown). The classification network will be described in detail with reference to FIG. 8.

FIG. 8 is a diagram illustrating a classification network according to an embodiment of the present disclosure.

A classification network 810 according to an embodiment may be a 2-class classification model that classifies an input image into two types. For example, the classification network 810 may be a model that classifies an input image as a deteriorated image or a normal image. For example, referring to FIG. 8, the classification network 810 may include a VGG network including a plurality of convolutional layers 812, a plurality of pooling layers 814, and a plurality of fully-connected layers 816. The classification network 810 is not limited thereto and may include various structures.

Referring back to FIG. 7, when the deteriorated image detection unit 710 classifies an input image as a deteriorated image, the deteriorated image processing unit 720 may perform image processing on the input image. In an embodiment, the deteriorated image processing unit 720 may be implemented with an AI algorithm, for example, by using a GAN.

The deteriorated image processing unit 720 according to an embodiment may include the facial image detection unit 722, the facial image restoration unit 724, the background restoration unit 726, and the region combining unit 728.

The facial image detection unit 722 may detect a facial region by using various algorithms and various models. For example, the facial image detection unit 722 may detect a facial region by using a histogram of oriented gradient (HOG)-based feature detection algorithm. In an embodiment, the facial image detection unit 722 may divide the input image into regions having a certain size, and calculate gradients of pixels for each region. For example, the facial image detection unit 722 calculates, for each region, a histogram of the directions of pixels of which the gradients are greater than a certain value from among pixels included in one region, and determine whether the region is a facial region, based on the calculated histogram. In an embodiment, the facial image detection unit 722 may detect a facial region by using the classification network 810, but is not limited thereto.

When the input image includes a facial region, the facial image restoration unit 724 may perform image processing to restore the image quality of the facial region included in the input image by using a face restoration model, and output a facial region with restored image quality.

The background restoration unit 726 may perform image processing to restore the image quality of a background region included in the input image other than the facial region by using a background restoration model, and output a background region with restored image quality.

The region combining unit 728 may obtain a restored image by combining the facial region of which the image quality is restored by the facial image restoration unit 724, with the background region of which the image quality is restored by the background restoration unit 726.

Meanwhile, when the deteriorated image detection unit 710 classifies the input image as a normal image rather than a deteriorated image, the input image may not be input to the deteriorated image processing unit 720.

The deteriorated image restoration model, the face restoration model, and the background restoration model according to an embodiment may include image processing networks having the same or similar structure, and the image processing network may include one or more networks.

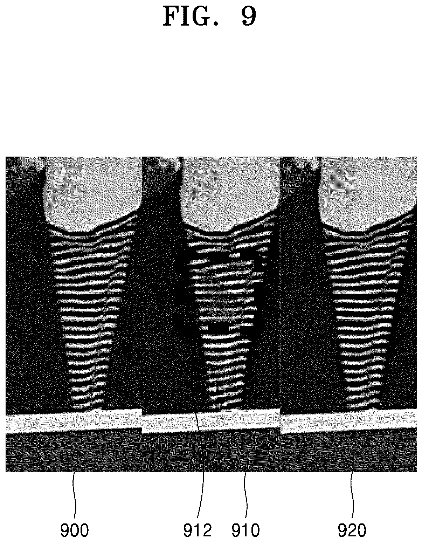

FIG. 9 is a diagram for describing a method by which an electronic device outputs an image with color loss, according to an embodiment of the present disclosure.

Referring to FIG. 9, unintentional color noise may occur during a process in which the electronic device restores a deteriorated image. For example, the electronic device may generate a second image 910 by restoring a first image 900, which is a deteriorated image. During an image restoration process of the electronic device, unintentional color noise 912 may appear in a middle part of the second image 910. The electronic device may intentionally generate color loss to generate a third image 920 without the color noise 912. Hereinafter, a method by which the electronic device outputs an image without the color noise 912 will be described.

The electronic device may train a GAN to restore a deteriorated image. According to an embodiment, the electronic device may determine a weight for at least one node of the GAN in order to effectively restore a deteriorated image. For example, the electronic device may determine weights of the GAN by using a ground-truth (GT) image with a significantly low degree of deterioration. The GT image is an arbitrary image with a significantly low degree of deterioration, and may be data from a real environment for training and testing an output of the GAN.

In an embodiment, the electronic device may generate a test image by intentionally adding noise to the GT image, and input the test image into the GAN. The electronic device may compare an output image generated by inputting the test image into the GAN, with the original GT image, and calculate a pixel-wise error (e.g.,

L1 loss or L2 loss) of the output image and the GT image. The pixel-wise error is a value that reflects a difference between the values of each pixel of the output image and the GT image. For example, L1 loss may be calculated by summing up the differences between the values of the respective pixels of the output image and the GT image, and L2 loss may be calculated by summing up the squares of the differences between the values of the respective pixels of the output image and the GT image.

According to an embodiment, the electronic device may convert the color domains of the output image and the GT image, and calculate a pixel-wise error of the output image and the GT image of which the color domains are converted. For example, the electronic device may convert the output image and the GT image, from the RGB format to the YUV format (or the HSV format), and calculate a pixel-wise error of the output image and the GT image in the YUV format.

In an embodiment, the electronic device may calculate total variation (TV) values of the output image and the GT image. The TV value is a value representing the color variation of each image, and the total variation value of a natural image (e.g., a GT image) may be less than a predetermined value. On the contrary, the TV value of a modified photo or an image with an error having occurred during a restoration process may be calculated to be greater than the predetermined value. The electronic device may calculate the TV value of the output image of which the color domain is converted. According to an embodiment, the electronic device may calculate the TV value by using information about a chroma channel. The chroma channel contains information about color from among three channels of an image, and may be a UV channel in the YUV format or an H channel in the HSV format.

The electronic device may determine the weights of the GAN based on the calculated pixel-wise error and TV value. The electronic device may determine (or change) the weights such that the pixel-wise error and the TV value decrease.

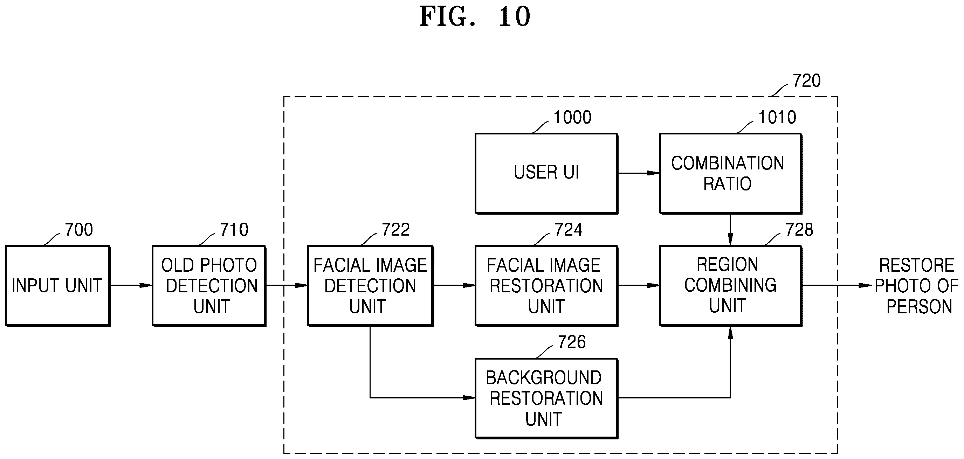

FIG. 10 is a diagram for describing an embodiment in which an electronic device adjusts a ratio for combining a quality-improved facial image with a background image, according to an embodiment of the present disclosure. For brevity of description, descriptions of the functional blocks described above with reference to FIG. 7 will be omitted.

The electronic device may determine a combination ratio 1010 for combining a quality-improved facial image with a background image.

According to an embodiment, the region combining unit 728 may determine the combination ratio 1010 based on a user input. For example, the region combining unit 728 may provide a user interface 1000 for selecting the combination ratio 1010, and determine the combination ratio 1010 based on a user's touch input to the interface 1000. For example, when the user determines the maximum value of the combination ratio 1010 to be 0.5 through the interface 1000, the region combining unit 728 may generate an output image by a combination ratio of 0.5 or less when combining the quality-improved facial image with the background image. Even when it is determined that the optimal value of the combination ratio for combining the quality-improved facial image with the background image is 0.7, the electronic device may determine the combination ratio to be 0.5.

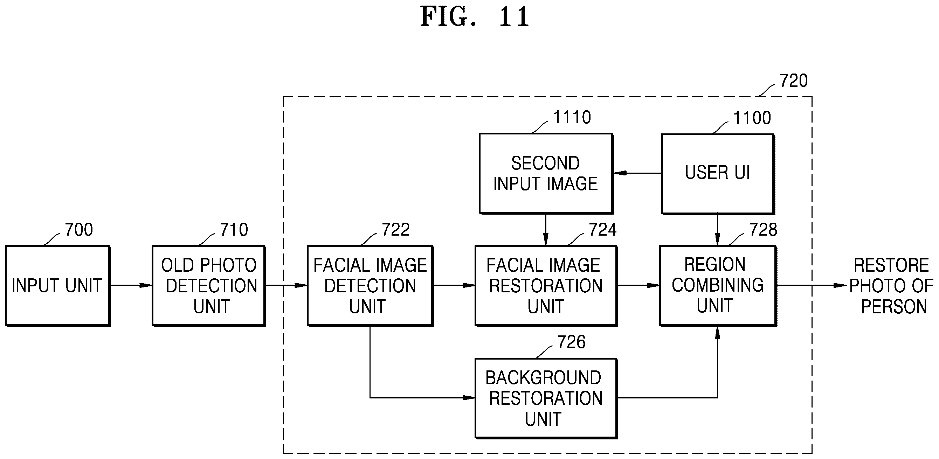

FIG. 11 is a diagram for describing a method by which an electronic device improves image quality by using a second input image, according to an embodiment of the present disclosure. For brevity of description, descriptions provided above with reference to FIGS. 7 and 8 will be omitted.

In an embodiment, the facial image restoration unit 724 may obtain a second input image 1110. The second input image 1110 is an image different from the input image input to the input unit 700, and may be a different photo of the same person or a photo of a different person. In an embodiment, the facial image restoration unit 724 may restore a facial image of the input image by referring to the second input image 1110. The facial image restoration unit 724 may provide a user interface 1100 and obtain the second input image 1110 based on a user input to the user interface 1100.

According to an embodiment, the facial image restoration unit 724 may obtain the second input image 1110 before the input image is input to the input unit 700, and train the face restoration model reflecting the second input image 1110. The facial image restoration unit 724 may train the face restoration model by using a new loss function that allows the model to restore a face to have a similar style to that of the second input image 1110. The facial image restoration unit 724 may extract features of a facial region of the second input image 1110, and calculate a new loss function by using Equation 2 below.

【Equation 2】

$$L_{new} = L_{original} + L_{style}$$

$L_{new}$: New loss function reflecting style of second input image
$L_{original}$: Existing loss function
$L_{style}$: Loss function for style of second input image

For example, the facial image restoration unit 724 may restore the input image, which is a deteriorated image, to have similar facial features or texture to that of the second input image 1110, by using the new loss function.

An electronic device for improving the quality of an input image according to the technical idea of the present disclosure includes a memory storing at least one instruction, and at least one processor configured to, by executing the at least one instruction, calculate a degree of deterioration of the input image, in response to determining that the degree of deterioration of the input image is greater than a predetermined value, detect at least one facial image included in the input image, generate region information indicating a position and a type of at least one region included in the at least one facial image, generate a quality-improved facial image by using an artificial neural network (ANN) that uses the input image and the region information as input, and generate an output image by combining the quality-improved facial image with the input image.

In addition, according to the technical idea of the present disclosure, the at least one processor may be further configured to calculate at least one degree of deterioration indicating the quality of each of the at least one facial image, based on characteristic information including color information and noise information of the input image, and determine whether the input image needs image quality improvement, based on the at least one calculated degree of deterioration.

In addition, according to the technical idea of the present disclosure, the at least one processor may be further configured to, in response to a ratio of a sum of the at least one degree of deterioration to a total number of the at least one facial image being calculated to be greater than a predetermined value, determine that the input image needs image quality improvement.

In addition, according to the technical idea of the present disclosure, the at least one processor may be further configured to, in response to determining that the degree of deterioration is greater than a predetermined value, determine that the facial image corresponding to the degree of deterioration needs image quality improvement.

In addition, according to the technical idea of the present disclosure, the at least one processor may be further configured to, in response to a ratio of the number of facial images determined to need image quality improvement to the total number of the at least one facial image being greater than a predetermined value, determine that the input image needs image quality improvement.

In addition, according to the technical idea of the present disclosure, the at least one processor may be further configured to generate array data that has a same size as color data containing RGB information of each pixel of the input image, wherein all elements of the array data have a value of 0, and generate the region information by assigning a value of 1 to at least one element of the array data corresponding to the at least one region included in the facial image.

In addition, according to the technical idea of the present disclosure, the at least one processor may be further configured to determine a type of the at least one region of the facial image, generate the array data having the same size as the color data, wherein all elements of the array data have a value of 0, and generate the region information by assigning a value indicating the determined type of the at least one region included in the facial image, to at least one element of the array data corresponding to the at least one region.

In addition, according to the technical idea of the present disclosure, the at least one processor may be further configured to generate the region information indicating at least one of an outline of the at least one region included in the at least one facial image, and an inside of the at least one region.

In addition, according to the technical idea of the present disclosure, the at least one processor may be further configured to detect, from the input image, a background image other than the at least one facial image, determine a combination ratio of the quality-improved facial image to the background image, and generate the output image by combining the quality-improved facial image with the background image based on the combination ratio.

In addition, according to the technical idea of the present disclosure, the at least one processor may be further configured to determine the combination ratio based on a user input.

In addition, according to the technical idea of the present disclosure, the color data may include information about R, G, and B of each pixel of the input image.

In addition, according to the technical idea of the present disclosure, the at least one processor may be further configured to obtain a GT image, generate a test image by adding noise to the GT image, obtain an output image by inputting the test image into a generative adversarial network having preset weights, convert color domains of the output image and the test image, calculate a pixel-wise error of the output image and test image of which the color domains are converted, and change the weights based on the pixel-wise error.

In addition, according to the technical idea of the present disclosure, the at least one processor may be further configured to calculate a TV value of a chroma channel of the output image of which the color domain is converted, and in response to determining that the TV value of the chroma channel is greater than a predetermined value, change the weights.

A method of improving the quality of an image by using an electronic device for improving the quality of an input image according to the technical idea of the present disclosure includes calculating a degree of deterioration of the input image, and in response to determining that the degree of deterioration of the input image is greater than a predetermined value, detecting at least one facial image included in the input image, generating region information indicating a position and a type of at least one region included in the at least one facial image, generating a quality-improved facial image by using an ANN that uses the input image and the region information as input, and generating an output image by combining the quality-improved facial image with the input image.

In addition, according to the technical idea of the present disclosure, the generating of the output image may include calculating at least one degree of deterioration indicating the quality of each of the at least one facial image, based on characteristic information including color information and noise information of the input image, and determining whether the input image needs image quality improvement, based on the at least one calculated degree of deterioration.

In addition, according to the technical idea of the present disclosure, the generating of the region information may further include generating array data that has a same size as color data containing RGB information of each pixel of the input image, wherein all elements of the array data have a value of 0, and generating the region information by assigning a value of 1 to at least one element of the array data corresponding to the at least one region included in the facial image.

In addition, according to the technical idea of the present disclosure, the generating of the region information may further include determining a type of the at least one region of the facial image, generating the array data having the same size as the color data, wherein all elements of the array data have a value of 0, and generating the region information by assigning a value indicating the determined type of the at least one region included in the facial image, to at least one element of the array data corresponding to the at least one region.

In addition, according to the technical idea of the present disclosure, the generating of the output image may further include detecting, from the input image, a background image other than the at least one facial image, and generating the output image by combining the quality-improved facial image with the background image.

In addition, according to the technical idea of the present disclosure, the method may further include obtaining a GT image, generating a test image by adding noise to the GT image, obtaining an output image by inputting the test image into a generative adversarial network having preset weights, converting color domains of the output image and the test image, calculating a pixel-wise error of the output image and test image of which the color domains are converted, and changing the weights based on the pixel-wise error.

Example embodiments have been described herein and illustrated in the drawings. Although the embodiments have been described herein by using specific terms, they are used only for the purpose of explaining the technical spirit of the present disclosure and not used to limit the meaning or scope of the claims. Therefore, those of skill in the art will understand that various modifications and other equivalent embodiments may be derived from the embodiments described herein. Therefore, the true technical protection scope of the present disclosure should be determined by the appended claims.

## Claims

1. An electronic device for improving quality of an input image, the electronic device comprising:

   a memory storing at least one instruction; and at least one processor configured to, by executing the at least one instruction, calculate a degree of deterioration of the input image, in response to determining that the degree of deterioration of the input image is greater than a predetermined value, detect at least one facial image included in the input image, generate region information indicating a position and a type of at least one region included in the at least one facial image, generate a quality-improved facial image by using an artificial neural network (ANN) that uses the input image and the region information as input, and generate an output image by combining the quality-improved facial image with the input image.

2. The electronic device of claim 1, wherein the at least one processor is further configured to calculate at least one degree of deterioration indicating quality of each of the at least one facial image, based on characteristic information including color information and noise information of the input image, and determine whether the input image needs image quality improvement, based on the at least one calculated degree of deterioration.

3. The electronic device of claim 2, wherein the at least one processor is further configured to, in response to a ratio of a sum of the at least one degree of deterioration to a total number of the at least one facial image being calculated to be greater than a predetermined value, determine that the input image needs image quality improvement.

4. The electronic device of claim 2 or 3, wherein the at least one processor is further configured to, in response to determining that the degree of deterioration is greater than a predetermined value, determine that the facial image corresponding to the degree of deterioration needs image quality improvement.

5. The electronic device of claim 4, wherein the at least one processor is further configured to, in response to a ratio of the number of facial images determined to need image quality improvement to the total number of the at least one facial image being greater than a predetermined value, determine that the input image needs image quality improvement.

6. The electronic device of any one of claims 1 to 5, wherein the at least one processor is further configured to generate array data that has a same size as color data containing red-green-blue (RGB) information of each pixel of the input image, wherein all elements of the array data have a value of 0, and generate the region information by assigning a value of 1 to at least one element of the array data corresponding to the at least one region included in the facial image.

7. The electronic device of any one of claims 1 to 6, wherein the at least one processor is further configured to determine a type of the at least one region of the facial image, generate the array data having the same size as the color data, wherein all elements of the array data have a value of 0, and generate the region information by assigning a value indicating the determined type of the at least one region included in the facial image, to at least one element of the array data corresponding to the at least one region.

8. The electronic device of any one of claims 1 to 7, wherein the at least one processor is further configured to generate the region information indicating at least one of an outline of the at least one region included in the at least one facial image, and an inside of the at least one region.

9. The electronic device of any one of claims 1 to 8, wherein the at least one processor is further configured to detect, from the input image, a background image other than the at least one facial image, determine a combination ratio of the quality-improved facial image to the background image, and generate the output image by combining the quality-improved facial image with the background image based on the combination ratio.

10. The electronic device of any one of claims 1 to 9, wherein the at least one processor is further configured to obtain a ground-truth (GT) image, generate a test image by adding noise to the GT image, obtain an output image by inputting the test image into a generative adversarial network having preset weights, convert color domains of the output image and the test image, calculate a pixel-wise error of the output image and test image of which the color domains are converted, and change the weights based on the pixel-wise error.

11. The electronic device of claim 10, wherein the at least one processor is further configured to calculate a total variance (TV) value of a chroma channel of the output image of which the color domain is converted, and in response to determining that the TV value of the chroma channel is greater than a predetermined value, change the weights.

12. A method of improving quality of an image by using an electronic device for improving quality of an input image, the method comprising calculating a degree of deterioration of the input image, and in response to determining that the degree of deterioration of the input image is greater than a predetermined value, detecting at least one facial image included in the input image, generating region information indicating a position and a type of at least one region included in the at least one facial image, generating a quality-improved facial image by using an artificial neural network (ANN) that uses the input image and the region information as input, and generating an output image by combining the quality-improved facial image with the input image.

13. The method of claim 12, wherein the generating of the output image comprises calculating at least one degree of deterioration indicating quality of each of the at least one facial image, based on characteristic information including color information and noise information of the input image, and determining whether the input image needs image quality improvement, based on the at least one calculated degree of deterioration.

14. The method of claim 12 or 13, wherein the generating of the region information further comprises generating array data that has a same size as color data containing red-green-blue (RGB) information of each pixel of the input image, wherein all elements of the array data have a value of 0, and generating the region information by assigning a value of 1 to at least one element of the array data corresponding to the at least one region included in the facial image.

15. A computer-readable recording medium having recorded thereon a program for executing, on a computer, the method of any one of claims 12 to 14.

# FIG. 1

START

OBTAIN INPUT IMAGE ─ 100

IS IMAGE DETERIORATED? ─ 110

NO

YES

GENERATE REGION INFORMATION ABOUT FACIAL IMAGE ─ 120

GENERATE QUALITY-IMPROVED FACIAL IMAGE ─ 130

GENERATE OUTPUT IMAGE ─ 140

END

# FIG. 2

START

DETECT AT LEAST ONE FACIAL
IMAGE FROM INPUT IMAGE — 200

CALCULATE DEGREE OF DETERIORATION
OF EACH FACIAL IMAGE — 210

DETERMINE WHETHER QUALITY OF INPUT
IMAGE NEEDS TO BE IMPROVED — 220

END

# FIG. 3A

EP 4 462 350 A1

# FIG. 3B

x5
x4
x3
x2
x1
x0

4ch → 64ch    → 128ch    → 256ch    → 512ch    → 1024ch

# FIG. 4

402
404      400

412
414      410

# FIG. 5

500

# FIG. 6

602

600

## FIG. 7

```
INPUT
UNIT (700)
  →
DETERIORATED
IMAGE DETECTION
UNIT (710)
  →
[720]
  FACIAL
  IMAGE
  DETECTION UNIT (722)
    →
  FACIAL
  IMAGE
  RESTORATION UNIT (724)
    →
  REGION
  COMBINING
  UNIT (728)
    →  RESTORE PHOTO OF PERSON

  BACKGROUND
  RESTORATION UNIT (726)
```

EP 4 462 350 A1

# FIG. 8

DETERIORATED IMAGE?
OR
NORMAL IMAGE?

FIG. 9

900          912  910          920

# FIG. 10

INPUT UNIT `700`

OLD PHOTO DETECTION UNIT `710`

FACIAL IMAGE DETECTION UNIT `722`

USER UI `1000`

COMBINATION RATIO `1010`

FACIAL IMAGE RESTORATION UNIT `724`

BACKGROUND RESTORATION UNIT `726`

REGION COMBINING UNIT `728`

`720`

RESTORE PHOTO OF PERSON

EP 4 462 350 A1

# FIG. 11

EP 4 462 350 A1

## INTERNATIONAL SEARCH REPORT

| International application No. |
| --- |
| **PCT/KR2022/020254** |

### A.     CLASSIFICATION OF SUBJECT MATTER

**G06T 5/00**(2006.01)i; **G06T 5/50**(2006.01)i; **G06T 7/11**(2017.01)i; **G06T 3/40**(2006.01)i; **G06T 5/40**(2006.01)i; **G06N 3/02**(2006.01)i

According to International Patent Classification (IPC) or to both national classification and IPC

### B.     FIELDS SEARCHED

Minimum documentation searched (classification system followed by classification symbols)

G06T 5/00(2006.01); G06T 1/00(2006.01); G06T 3/40(2006.01); G06T 7/00(2006.01); H04N 19/126(2014.01); H04N 19/154(2014.01); H04N 5/232(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이미지 열화도(image deterioration), 노이즈(noise), 얼굴 이미지(face image), 영역 위치(region information), 인공신경망(artificial neural network; ANN), 이미지 화질 개선(image quality improvement)

### C.     DOCUMENTS CONSIDERED TO BE RELEVANT

| Category* | Citation of document, with indication, where appropriate, of the relevant passages | Relevant to claim No. |
| --- | --- | --- |
| Y | JP 5513960 B2 (MEGA CHIPS CORP.) 04 June 2014 (2014-06-04)<br>    See paragraphs [0023] and [0047]; and claim 1. | 1-15 |
| Y | JP 2013-054457 A (NIKON CORP.) 21 March 2013 (2013-03-21)<br>    See paragraphs [0065]-[0067]; and claims 1, 9, 11 and 16. | 1-15 |
| Y | KR 10-1653038 B1 (CHIPS&MEDIA, INC. et al.) 12 September 2016 (2016-09-12)<br>    See paragraphs [0011]-[0013]. | 6-8,14 |
| A | JP 2014-527778 A (I.C.V.T LTD.) 16 October 2014 (2014-10-16)<br>    See claim 1. | 1-15 |
| A | RUAN, Shuai et al. Multi-Pose Face Recognition Based on Deep Learning in Unconstrained Scene. Applied Sciences. 2020, Vol. 10, No. 13, pp. 1-17, 07 July 2020. [Retrieved on 19 March 2023]. Retrieved from <URL: https://www.mdpi.com/2076-3417/10/13/4669>.<br>    See pages 1-17. | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 March 2023** | **24 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/020254**

| Patent document cited in search report | | | Publication date (day/month/year) | Patent family member(s) | | | Publication date (day/month/year) |
|---|---|---|---|---|---|---|---|
| JP | 5513960 | B2 | 04 June 2014 | JP | 2011-221840 | A | 04 November 2011 |
| JP | 2013-054457 | A | 21 March 2013 | None | | | |
| KR | 10-1653038 | B1 | 12 September 2016 | KR | 10-2015-0129897 | A | 23 November 2015 |
| | | | | WO | 2015-174715 | A1 | 19 November 2015 |
| JP | 2014-527778 | A | 16 October 2014 | EP | 2751990 | A1 | 09 July 2014 |
| | | | | EP | 2751990 | A4 | 22 April 2015 |
| | | | | US | 10225550 | B2 | 05 March 2019 |
| | | | | US | 10567764 | B2 | 18 February 2020 |
| | | | | US | 2017-0244965 | A1 | 24 August 2017 |
| | | | | US | 2019-0158830 | A1 | 23 May 2019 |
| | | | | WO | 2013-030833 | A1 | 07 March 2013 |

Form PCT/ISA/210 (patent family annex) (July 2022)